(19)

Europäisches
Patentamt
European
Patent Office
Office européen
des brevets

(11)     **EP 2 148 430 B1**

(12)                              **EUROPEAN PATENT SPECIFICATION**

(45) Date of publication and mention
of the grant of the patent:
**07.05.2014   Bulletin 2014/19**

(51) Int Cl.:
**H02P 23/00** *(2006.01)*        **D06F 37/20** *(2006.01)*
**D06F 39/00** *(2006.01)*

(21) Application number: **08160828.3**

(22) Date of filing: **21.07.2008**

(54) **Method for determining total inertia and unbalanced load in a laundry drum of a washing machine**

Verfahren zum Bestimmen der Gesamtträgheit und unausgeglichener Masse in einer Waschtrommel einer Waschmaschine

Procédé pour déterminer l'inertie totale et la charge déséquilibrée dans le tambour de lavage d'un lave-linge

(84) Designated Contracting States:
**DE ES FR GB IT PL**

(43) Date of publication of application:
**27.01.2010   Bulletin 2010/04**

(73) Proprietor: **Whirlpool Corporation**
**Benton Harbor, MI 49022 (US)**

(72) Inventors:
• **Davide, Colombo**
  **21025 Comerio (IT)**
• **Jatta, Francesco**
  **21025 Comerio (IT)**

• **Petrigliano, Rocco**
  **21025 Comerio (IT)**
• **Bellinetto, Enrico**
  **21025 Comerio (IT)**

(74) Representative: **Guerci, Alessandro**
**Whirlpool Europe S.r.l.**
**Patent Department**
**Viale G. Borghi 27**
**21025 Comerio (VA) (IT)**

(56) References cited:
**EP-A- 1 113 102**

EP 2 148 430 B1

## Description

The present invention relates to a method for washing machine control.

More in particular, the present invention relates to a control algorithm capable to determine the load unbalance condition of a washing machine, for different machine working conditions.

More in detail, the method of the present invention is capable to precisely determine the total mass and the unbalance mass wet or dry, inside the drum of a washing machine, when the washing machine is fed by a power supply network provided with different nominal voltages, or when the power supply voltage is unstable and also when wear and tear change machine frictions causing a change in the behaviour of the washing machine. For instance, it could happen that the control has to increase the torque necessary to rotate the drum during spinning cycle.

With the term washing machine it is understood all kind of appliances having a rotating drum, whose speed can be increased to a value for which centrifugal forces are applied to the laundry, pushing the laundry to the side wall of the drum (called satellization speed). Washers and dryers are included in the above general definition.

In the art washing machines are known provided with methods for detecting the total mass and the unbalance mass inside the drum using kinematics controls, in order to set the correct spinning speed and to improve the washer performances avoiding dangerous situations.

EP1113102A1 describes a method to assess the total inertia, the laundry mass balance and unbalance of the washing machine, using the actuator control signal and a speed signal as feed back. This method discloses the injection of a known signal having a predetermined frequency pattern, or spectrum, added to the actuator control signal at given speed (for example the drum target speed). Such combination of control signals excites the system motor-drum-laundry so that by analysing the speed feedback signal by performing a frequency spectrum analysis, it's possible to detect the amount of balanced and unbalanced masses. Drawback of this solution is a lack of sensitivity concerning the mains voltage (for instance the network power supply voltage) and drum friction conditions, which results in a not correct mass and wrong unbalance assessment, especially when the mains voltage changes or when wear and tear increase the friction of the machine mechanisms. In fact, according to the disclosure of EP1113102A1, the signal conversion from the control to the motor system is modified in unpredictable manner in case of the friction and/or voltage changes. In particular, under different operating conditions, the torque produced by the motor following the injection of a known signal (i.e. a sinusoidal signal with fixed amplitude and frequency injected into the motor control signal) changes in unknown and unpredictable manner so that any mass estimation looses information about the load and is therefore corrupted.

The present invention overcomes the drawbacks of the prior art in estimating unbalanced and balanced masses by injecting in the motor drive system the excitation signal, and by compensating the response resulting from the injected signal, taking into account the value of the mains voltage and the inertia changes caused by friction or inertia changes. As result of the method of the present invention, the estimation of unbalanced and balanced masses is more robust to mains voltage and friction variations.

The method of the present invention can be advantageously applied for detecting the unbalanced and balanced masses on the majority of the existing washing machines, equipped with common control boards, being quickly executable and not causing significative costs increase for using additional expensive components. The method of the present invention can be used either for washers using traditional drum drive systems (motor, belt, drum) or for washers using direct drive systems.

The present method estimates the amount of the inertia/mass of a dry or wet load indifferently.

These objects are achieved by a method according to claim 1 and washing machine according to claim 11.

An additional mains voltage sensor is requested by the present invention whenever a direct measurement of the power supply voltage is necessary.

Other features and advantages of the present invention will become readily apparent to the skilled artisan from the following detailed description when read in the light of the accompanying drawings, in which:

- Fig. 1 is a schematic representation of a washing machine;
- Fig. 2 is a preferred washing machine control scheme according to the present invention;
- Fig. 3 is a plot of a family of motor characteristics curves;
- Fig. 4 is a detail of the generation of the injection signal according to the direct compensation method of the present invention;
- Fig. 5 shows a detail of the signal analysis phase according to the indirect compensation method of the present invention;
- Fig. 6 is the detail of the torque estimator block represented in Fig. 5;
- Fig. 7 shows comparative results of the indirect compensation method of the present invention, with a prior art method.

With reference to the drawings, a washing machine according to the present invention comprises a rotating drum *D* actuated by an electric motor *M*, an electronic control *MDS* including a speed sensor for driving the system and devices to fill in or fill out water in or out of the drum. Additionally, the washing machine may include a power supply voltage sensor.

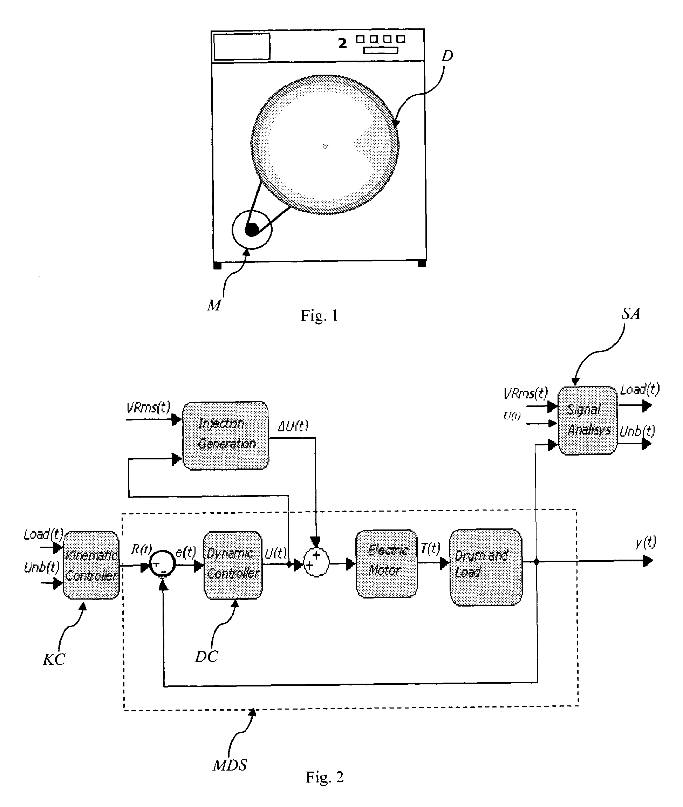

In Fig. 2 it is represented a preferred control scheme over which the method of the present invention is executed. The preferred scheme includes a kinematics controller *KC* which provides at its output a motor speed profile *R(t)* according to which the washing machine rotational drum speed *Y(t)* is driven by the electric motor through the application of a torque *T(t)*. A dynamic controller *DC* (a PID, for instance) regulates the electric motor torque *T(t)* by setting the motor control variable *U(t)* (for instance the firing angle of an electronic switch), according to the difference *e(t)* between the measured rotational drum speed Y(t), which is the output of the control system, and the speed profile *R(t)*. Preferably, in static or quasi static operating conditions of the above control system *MDS,* an excitation signal $\Delta U(t)$ is injected into the control variable *U(t)* resulting in an "injected torque" $\Delta T(t)$ and in a rotational drum speed fluctuation $\Delta Y(t)$ around the operative point. Signal injections are also possible in different operative conditions of the control system.

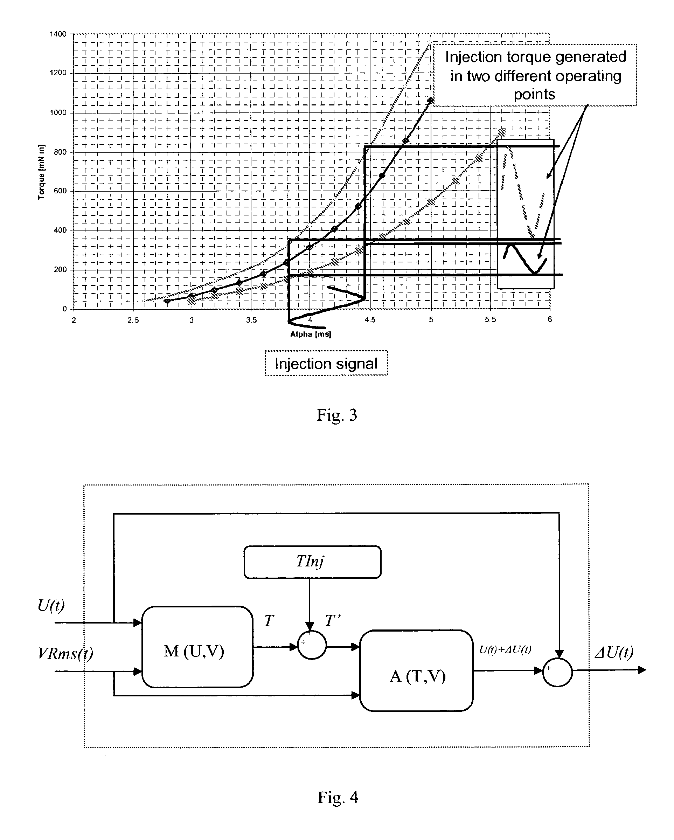

The present invention doesn't require any direct measurement of the torque *T(t)* applied to the drum because it uses an estimation based on transfer matrices also known as conversion surface or characteristics curves. In Fig. 3 it is shown an example of the transfer matrices wherein on the x-axis is the signal generated by the dynamic controller (for instance a PID) *U(t)* and on the y-axis is reported the relative motor output torque *T(t)*. In Fig. 3 are reported the characteristic curves related to three values of motor mains voltages (190V, 230V, 265V). The figure also shows different torque effects when injecting the same sinusoidal excitation signal $\Delta U(t)$ in input to the motor when the motor is supplied with different mains voltage values. These different behaviours are consequent to the different motor operating conditions, represented by the operating points on its respective characteristic curves in Fig. 3. According to the present invention, it is possible to compensate the "noisy effects" of mains voltage and inertia/friction variations in at least two ways and in particularly with a direct compensation method or with an indirect compensation method. Both compensations are based on the knowledge of the motor characteristics relationship (either the direct or the reverse one) at different mains voltage values, which are required in at least one computational step of the method. As characteristics relationship it is intended a relationship between the torque *T(t)* outputted by the motor and the motor control variable *U(t)* (for instance the firing-angle of a solid state switch driving the motor) in its operating and controlled conditions, when supplied with a mains voltage value. These relationships can be either curves calculated executing numerical models or be stored into the memory as a look-up tables.

In a preferred configuration the control system *MDS* comprises a voltage sensor to sense the mains voltage values and variations. The machine control unit, to which the sensor is connected, determines the RMS value *VRms(t)* of the sensed value. In an alternative embodiment, when there is not voltage sensor, the power supply nominal value is set during the installation of the washing machine or is estimated from the from the control variable *U(t)*, and the corresponding RMS value *VRms(t)* is set or determined by the control unit. In an equivalent manner, other electrical parameter linked with the mains voltage value can be used in the method of the present invention, for the same purpose. Starting from rotational drum speed *Y(t),* from the RMS voltage value *VRms(t)* and from the control variable *U(t),* the dry/wet load mass quantity *Load(t)* and the unbalanced mass inside the drum *Unb(t)* can be accurately estimated with operation accomplished outside of the closed loop control scheme *MDS.* These masses information can be used for taking decision during the execution of the spin cycle. In the direct compensation method the control variable *U(t)* is regulated by the control system in order to rotate the drum and its load at the speed *Y(t)* defined by the motor speed profile *R(t)*, independently from the inertia and friction conditions of the washing machine.

In operational conditions an excitation signal $\Delta U(t)$ is then injected to the motor control variable *U(t)* resulting in a predetermined "injected torque" quantity $\Delta T(t)$, independently of the mains voltage and of the inertia and friction conditions.

In Fig. 4 is represented a preferred logic scheme for generating the excitation signal $\Delta U(t)$ used for implementing the direct compensation method. According to this scheme the control variable *U(t)* of the control system is converted into a torque variable T by means of the direct characteristics curve *M(V,U)*. A predetermined torque injection signal *TInj* is added to the converted torque T and the overall signal is then newly transformed into a control variable value $U'(t) = U(t) + \Delta U(t)$ using the inverse characteristics curve *A(T,V)* transformation.

The transfer functions A(T,V) and M(V,U) express mathematically the physical relationship between the drive system operating point and the torque applied to the washer. In particular, the direct characteristic curve *M(V,U)* translates the control signal *U(t),* for instance the firing angle of its driving solid state switch, into the corresponding torque *T(t)* of the motor when supplied at the corresponding mains voltage value, which is linked with *VRms(t)*. Preferably, *M(V,U)* is a two-dimensional lookup table, but can also be a dynamic model of the electric motor, a simple mathematical model, or obtained by interpolating reference characteristics curves, stored into a memory location. In a similar manner, the inverse characteristics curves translates the motor torque *T* into the corresponding control signal *U(t)* of the motor when supplied at the corresponding mains voltage level, linked to *VRms(t)*. Also *A(T,V)* is preferably a two-dimensional lookup table, or a dynamic model of the electric motor, a simple mathematic model, or obtained by interpolating reference characteristics curves.

Preferably *TInj* is an artificial signal with a predetermined frequency and provided with high and predetermined amplitude, preferably fixed in all the mains voltage conditions, equals to $A_T$. The meaning of $A_T$ is the maximum torque used to excite the system. For instance $TInj = A_T\sin(\omega_{Inj}t)$, wherein $A_T$, $U(t)$ and $VRms(t)$ signals are supposed to be constant values, at least over the control period. If the motor rotational speed $Y(t)$ is driven by the control system in a static or quasi static conditions, the corresponding torque $T(t)$ can be considered to be almost a constant value $Tk$. It follows the overall torque signal $T'(t)$ is equal to $K\sin(\omega_{Inj}t) + Tk$. This torque signal is then reconverted into the control variable domain obtaining a new control signal $U'(t) = A(K\sin(\omega_{Inj}t) + Tk, V_{rms}(t))$, which can be decomposed into a constant value $U(t)$ and fluctuation component $\Delta U(t)$.

Finally, the excitation signal $\Delta U(t)$ with constant torque amplitude is obtained by subtracting the control variable $U(t)$ signal to the overall control signal $U'(t)$.

It follows that the drum rotational speed signal $Y(t)$ of the control scheme is compensated by taking into account the variations of mains voltage and frictions, and can be processed with the same method disclosed in EP1113102A1 for estimating the mechanical system, in particular the balanced and unbalanced masses, and for taking any further spinning process decision.

In the indirect compensation method, as in the method described in EP1113102A1, a fixed amplitude exciting signal $\Delta U(t)$ is injected. Differently from the direct compensation method, the signal is not compensated before to be injected, and consequently the induced injected torque strongly depends from the mains voltage value and from the washing machine inertia and frictions conditions.

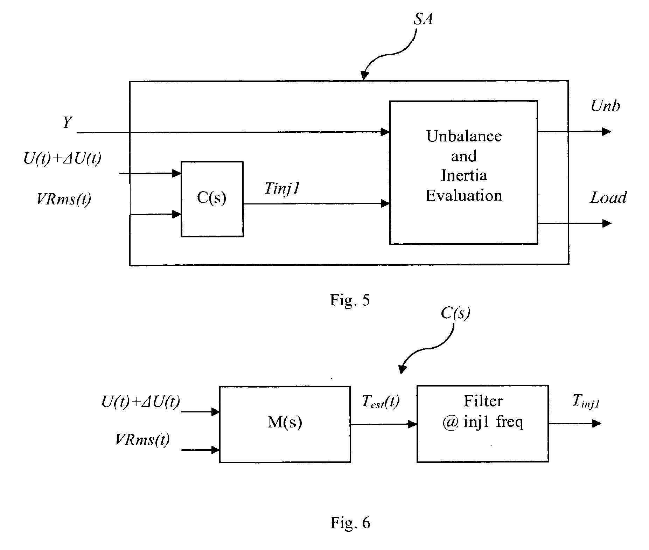

$\Delta U(t)$, which is the motor control excitation signal, is preferably shaped as a sinusoidal signal with a predetermined frequency. The corresponding amount of injected torque $Tinj1$ produced by the injected exciting signal $\Delta U(t)$, being dependent from the mains voltage value $VRms(t)$ and from the machine wear and tear conditions, is therefore not constant. Hence, to render reliable the estimation of the injected torque $Tinj$ and consequently reliable the estimation of the balance and unbalance mass (respectively $Load$ and $Unb$, the system response variable has to be compensated before to perform any mass estimations. According to a preferred embodiment of the present invention this can be made during a signal analysis SA phase, which is performed out from the closed loop control scheme of Fig. 2. As detailed in Fig. 5 compensation is achieved starting from the controlled output signal $Y(t)$ and using the motor characteristics relationships $M(U,V)$ and the $VRms(t)$ voltage information. A rotational speed fluctuation $\Delta Yj$ as effect of the amount of injected torque $Tinj1$ is superposed to the output rotational speed signal $Y$, regulated by control system $MDS$.

The signal analysis block $SA$ includes an estimator $C(U,V)$ which estimates the amount of injected torque $Tinj1$ generated in the motor operating conditions, including the mains voltage value.

A preferred torque estimator scheme $C(U,V)$ is shown in Fig. 6 and includes the transfer function $M(U, V)$ that represents the relationship between the motor torque signal $T$ and the control variable $U(t)$, in its operating conditions (the $M(U,V)$) relationship takes into account the mains voltage value $VRms(t)$).

More generally, the control command signal conversion into torque signal is performed by the estimator $C(s)$, which implements a general function whose behaviour is affected by the mains voltage value linked with $VRms(t)$, the configuration of electrical motor and load. As for $A(T,V)$ and $M(U,V)$ also $C(S)$ can be expressed through look-up tables or through computational models.

Because the overall control signal is given by the superposition of $U'(t) = U(t) + \Delta U(t)$, the overall torque signal estimated with the above transformation is given by $T' = T + Tinj1$. By applying a notch filter centred to the predetermined frequency is possible to separate the amount of injected torque $Tinj1$ from the overall signal.

As known from EP1113102A1, starting from the estimation of the amount of the injected torque $Tinj1$ and from the rotational speed fluctuation $\Delta Y$, the load mass quantity $Load$ and the unbalanced mass inside the drum $Unb$ can be accurately calculated, being the injected torque knowledge sufficient to identify the mechanical properties of the load. For instance, to simplify the torque estimation it could be assumed that the amount of injected torque $Tinj1$ can be expressed as a linear function around the operating point of the motor on its characteristics relationship curve, as follows:

$T(U(t)) = k*U(t)$, wherein $k$ is a predetermined constant value stored in the memory of the control system.

In general, the evaluation of the unbalance mass and of the inertia detection (the load mass) uses the information of the speed fluctuations $\Delta Y$ around the operating rotational speed $Y$ and may include filtering at the frequency of the drum rotation and the averaging of the modules evaluated at the injection frequency.

In a simplified model, the unbalance estimated mass $Unb$ can be obtained multiplying the compensating value $1/T_{inj1}$, which derives from the estimation of the amount of injected torque $Tinj1$, with the rotational speed fluctuations $\Delta Y$ due to the injected exciting signal and unbalance mass. As known from EP1113102A1 using a filter analysis it is possible to split the component of speed fluctuation due to the unbalance load ($\Delta Yu$) and that due to the injection exciting signal ($\Delta Yinj$).

For instance, the unbalance mass value $Unb$ can be obtained from the equation:

$$Unb = k * \Delta Yu / [\Delta Yinj / T_{inj1}]$$

*For instante the balance mass can be obtained*

*from the equation:*

$$Bal = k2 \, / \, (\Delta Yinj \, / \, T_{inj1})$$

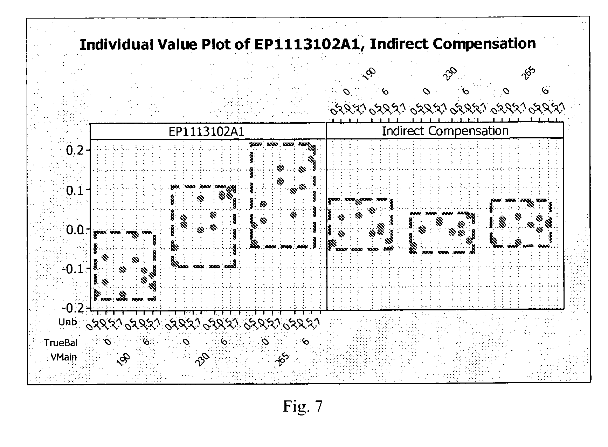

In Fig. 7 is compared, for instance, the unbalance estimation error of the method according to the present invention with the same error obtained with the method described in EP1113102A1. These test have been performed using known loads (rubber loads).

Test results of Fig. 7 also show dispersions of the measures in different mains voltage conditions. The estimation errors, is given by the real unbalance load (rubber load used) minus the estimated unbalance, and comparing the results of the known method with the one of the present invention. In particular, results show the robustness of the new algorithm on the voltage variation.

**Claims**

1. Method for determining load and unbalance load in a washing machine having a motor drive system *(MDS)* for rotating the motor at a target speed, the motor drive system being supplied with an auxiliary signal **having predetermined frequency spectrum** and the total load and the unbalanced load being determined by means of speed fluctuations *(ΔY, ΔY(t))*, around the target speed *(Y, Y(t))*, **characterized in that,** the method further includes a computational step involving **a relationship** *(A(T,V), M(V, U),C(S))* **between the torque (T(t)) outputted by the motor and the control variable U(t) in its operating and controlled conditions, when supplied with a mains voltage value.**

2. Method according to claim 1 wherein the computational step also involves an electric parameter *(VRms(t))* linked with the mains voltage value.

3. Method according to claim 1 or 2 further comprising the step of sensing or setting or estimating the mains voltage value for determining an electric parameter *(VRms(t))*.

4. Method according to claims 1 to 3 wherein said computational step has in input a motor control variable *(U(t)) U(t)) +,ΔU(t))*, said relationship *(M(V, U),C(s))* and an electric parameter *(VRms(t))* linked with the mains voltage value, and provides a motor torque value *((T, T(t), Tinj1, Test(t))*.

5. Method according to claims 1 to 3 wherein said computational step has in input the a motor torque value *((T, T),* said relationship *(A(T, V))* and an electric parameter *(VRms(t))* linked with the mains voltage value, and provides a motor control variable value *(U(t)), U(t)) + ΔU(t))*.

6. Method according to any of the preceding claims wherein the auxiliary signal has an effect on the motor of adding an injected torque *(TInj, ΔT(t))* to the motor torque *T(t)* set from the motor drive system *(MDS)*, said injected torque *(TInj, ΔT(t))* being provided with a predetermined amplitude *(A_T)*.

7. Method according to claim 1 to 4 wherein the auxiliary signal is a control variable *(U(t), ΔU(t)* signal provided with a predetermined amplitude.

8. Method according to any of the preceding claims wherein the motor control variable *(U(t))* is the firing angle *(Alpha)* of an electronic switch of the motor drive system

9. Method according to any of the preceding claims wherein the relationship *(A(T,V), M(V,U), C(s))* is suitable to be stored in a memory under the form of a lookup table linked to the electric parameter or under the form of a computational model linked to the electric parameter.

10. Method according to any of the preceding claims wherein said computational step is not part of the motor drive system.

11. Washing machine comprising an electronic control system including a motor drive system for rotating the motor at a target speed, and a rotating drum driven by the motor, the electronic control system comprising means for supplying the motor drive system with an auxiliary signal having predetermined frequency spectrum, the electronic control system comprising means for determining the total load and unbalanced load cooperating with said supplying means **characterized in that** it comprises means for executing a method according to any claim 1 to 10.

12. Washing machine according to claim 11 further comprising means for setting or sensing the mains voltage value, said setting or sensing means cooperating with said means for determining the total load and unbalanced load.

**Patentansprüche**

1. Verfahren zur Bestimmung von Last und unsymmetrischer Last in einer Waschmaschine mit einem Motorantriebssystem *(MDS)* zum Drehen des Motors bei einer Zieldrehzahl, wobei das Motorantriebssystem mit einem Hilfssignal mit einem vorbestimmten Frequenzspektrum versorgt wird, und die Gesamtlast und die unsymmetrische Last anhand von Drehzahlschwankungen *(ΔY, ΔY (t))* um die Zieldrehzahl *(Y, Y(t))* bestimmt werden, **dadurch gekennzeichnet, dass** das Verfahren ferner einen Rechenschritt umfasst, der eine Beziehung *(A(T, V), M(V, U), C(S))* zwischen dem vom Motor abgegebenen Drehmoment (T(t)) und der Regelgröße U(t) bei seinen Betriebs- und Regelbedingungen einbezieht, wenn mit einem Netzspannungswert versorgt.

2. Verfahren nach Anspruch 1, wobei der Rechenschritt außerdem einen mit dem Netzspannungswert verbundenen elektrischen Parameter *(VRms(t))* einbezieht.

3. Verfahren nach Anspruch 1 oder 2, ferner umfassend den Schritt des Messens oder Festlegens oder Schätzens des Netzspannungswerts zum Bestimmen eines elektrischen Parameters *(URms(t))*.

4. Verfahren nach Anspruch 1 bis 3, wobei der Rechenschritt bei Eingabe eine Motorregelgröße *(U(t)) U(t) + ΔU(t))*, die Beziehung *(M(V, U), C(s))* und einen mit dem Netzspannungswert verbundenen elektrischen Parameter *(VRms(t))* aufweist und einen Motordrehmomentwert *((T, T(t), Tinj1, Test(t))* bereitstellt.

5. Verfahren nach Anspruch 1 bis 3, wobei der Rechenschritt bei Eingabe den einen Motordrehmomentwert *((T, T')*, die Beziehung *(A(T, V))* und einen mit dem Netzspannungswert verbundenen elektrischen Parameter *(VRms(t))* aufweist und einen Motorregelgrößenwert *(U(t)), U(t) + ΔU(t))* bereitstellt.

6. Verfahren nach einem der vorhergehenden Ansprüche, wobei das Hilfssignal eine Wirkung auf den Motor des Hinzufügens eines angelegten Drehmoments *(TInj, ΔT(t))* zum Motordrehmoment *T(t)* hat, das vom Motorantriebssystem *(MDS)* festgelegt wird, wobei das angelegte Drehmoment *(TInj, Δ*T(t)) mit einer vorbestimmten Amplitude *(A_T)* bereitgestellt wird.

7. Verfahren nach Anspruch 1 bis 4, wobei das Hilfssignal ein Regelgrößen *(U(t), Δ*U(t))-Signal ist, das mit einer vorbestimmten Amplitude bereitgestellt wird.

8. Verfahren nach einem der vorhergehenden Ansprüche, wobei die Motorregelgröße *(U(t))* der Zündwinkel *(Alpha)* eines elektronischen Schalters des Motorantriebssystems ist.

9. Verfahren nach einem der vorhergehenden Ansprüche, wobei die Beziehung *(A(T, V), M(V, U), C(s))* in Form einer mit dem elektrischen Parameter verbundenen Nachschlagetabelle oder in Form eines mit dem elektrischen Parameter verbundenen Rechenmodells in einem Speicher gespeichert werden kann.

10. Verfahren nach einem der vorhergehenden Ansprüche, wobei der Rechenschritt nicht zum Motorantriebssystem gehört.

11. Waschmaschine, umfassend ein elektronisches Steuersystem, umfassend ein Motorantriebssystem zum Drehen des Motors bei einer Zieldrehzahl, und eine rotierende Trommel, die durch den Motor angetrieben wird, wobei das elektronische Steuersystem Mittel zum Versorgen des Motorantriebssystems mit einem Hilfssignal mit einem vorbestimmten Frequenzspektrum umfasst, das elektronische Steuersystem Mittel zum Bestimmen der Gesamtlast und der unsymmetrischen Last in Zusammenwirkung mit den Versorgungsmitteln umfasst, **dadurch gekennzeichnet, dass** es Mittel zum Ausführen eines Verfahrens nach einem der Ansprüche 1 bis 10 umfasst.

12. Waschmaschine nach Anspruch 11, ferner umfassend Mittel zum Festlegen oder Messen des Netzspannungswerts, wobei das Festlegungs- oder Messmittel mit den Mitteln zum Bestimmen der Gesamtlast und der unsymmetrischen Last zusammenwirkt.

**Revendications**

1. Procédé pour déterminer une charge et une charge déséquilibrée dans une machine à laver comportant un système d'excitation de moteur (MDS) pour faire tourner le moteur à une vitesse cible, un signal auxiliaire possédant un spectre de fréquence prédéterminé étant fourni au système d'excitation de moteur et la charge totale et la charge déséquilibrée étant déterminées au moyen de fluctuations de vitesse *(ΔY, ΔY(t))*, autour de la vitesse cible *(Y, Y(t))*, **caractérisé en ce que** le procédé comprend en outre une étape de calcul comprenant une relation *(Δ(T, V), M (V, U), C(S))* entre le couple *(T(t))* produit par le moteur et la variable de commande *U(t)* dans ses conditions de fonctionnement et commandées, lors de la fourniture d'une valeur de tension de secteur.

2. Procédé selon la revendication 1, dans lequel l'étape de calcul comprend également un paramètre électrique *(VRms(t))* lié à la valeur de tension de secteur.

3. Procédé selon la revendication 1 ou 2, comprenant en outre l'étape de la détection ou du réglage ou de l'estimation de la valeur de tension de secteur pour déterminer un paramètre électrique *(URms(t))*.

4. Procédé selon les revendications 1 à 3, dans lequel ladite étape de calcul possède en entrée une variable de commande de moteur *(U(t))* U(t))+,*Δt*(t)), ladite relation *(M(V,U), C(s))* et un paramètre électrique *(VRms(t))* lié à la valeur de tension de secteur, et fournit une valeur de couple de moteur *((T, T(t), Tinj1, Test (t))*.

5. Procédé selon les revendications 1 à 3, dans lequel ladite étape de calcul possède en entrée une valeur de couple de moteur *((T, T')*, ladite relation *(Δ(T, V))* et un paramètre électrique *(VRms(t))* lié à la valeur de tension de secteur, et fournit une valeur variable de commande de moteur *(U(t)), U(t)+ΔU(t))*.

6. Procédé selon une quelconque des revendications précédentes, dans lequel le signal auxiliaire possède un effet sur le moteur de l'ajout d'un couple injecté *(TInj, ΔT(t))* au couple de moteur *T(t)* réglé à partir du système d'excitation de moteur (MDS), une amplitude prédéterminée *(A$_T$)* étant fournie audit couple injecté *(TInj, ΔT(t))*.

7. Procédé selon la revendication 1 à 4, dans lequel le signal auxiliaire est un signal de variable de commande *(U(t), ΔU(t))* auquel une amplitude prédéterminée est fournie.

8. Procédé selon une quelconque des revendications précédentes, dans lequel la variable de commande de moteur *(U(t))* est l'angle d'allumage *(Alpha)* d'un commutateur électronique du système d'excitation de moteur

9. Procédé selon une quelconque des revendications précédentes, dans lequel la relation *(A(T,V), M(V, U), C(s))* est appropriée pour être stockée dans une mémoire sous forme de table de conversion liée au paramètre électrique ou sous forme de modèle de calcul lié au paramètre électrique.

10. Procédé selon une quelconque des revendications précédentes, dans lequel ladite étape de calcul ne fait pas partie du système d'excitation de moteur.

11. Machine à laver comprenant un système de commande électronique comprenant un système d'excitation de moteur pour faire tourner le moteur à une vitesse cible, et un tambour rotatif entraîné par le moteur, le système de commande électronique comprenant des moyens pour fournir au système d'excitation de moteur un signal auxiliaire possédant un spectre de fréquence prédéterminé, le système de commande électronique comprenant des moyens pour déterminer la charge totale et la charge déséquilibrée coopérant avec lesdits moyens de fourniture, **caractérisée en ce qu'**elle comprend des moyens pour exécuter un procédé selon une quelconque revendication 1 à 10.

12. Machine à laver selon la revendication 11, comprenant en outre des moyens pour régler ou détecter la valeur de tension de secteur, lesdits moyens de réglage ou de détection coopérant avec lesdits moyens pour déterminer la charge totale et la charge déséquilibrée.

Fig. 1

Fig. 2

Fig. 3

Fig. 4

SA

Y

U(t)+ΔU(t)

VRms(t)

C(s)   Tinj1

Unbalance
and
Inertia
Evaluation

Unb

Load

Fig. 5

C(s)

U(t)+ΔU(t)

VRms(t)

M(s)   $T_{est}(t)$

Filter
@ inj1 freq

$T_{inj1}$

Fig. 6

10

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1113102 A1